# EUROPÄISCHE PATENTSCHRIFT

(11) **EP 3 321 007 B1**
(45) Veröffentlichungstag und Bekanntmachung des Hinweises auf die Patenterteilung: **20.11.2019**
(21) Anmeldenummer: 17177223.9
(22) Anmeldetag: 21.06.2017
(51) Int. Cl.: B33Y 30/00, B33Y 40/00, B01D 46/00, B01D 46/24, B01D 46/42, B29C 64/371, B22F 3/105, B29C 64/153, B29C 64/35

(54) **VORRICHTUNG ZUR ADDITIVEN HERSTELLUNG DREIDIMENSIONALER OBJEKTE**
APPARATUS FOR ADDITIVE MANUFACTURING OF THREE-DIMENSIONAL OBJECTS
DISPOSITIF DE FABRICATION ADDITIVE D'OBJETS TRIDIMENSIONNELS

(30) Priorität: 14.11.2016 DE 102016121784
(43) Veröffentlichungstag der Anmeldung: 16.05.2018
(73) Patentinhaber: CL Schutzrechtsverwaltungs GmbH, 96215 Lichtenfels (DE)
(72) Erfinder: Hofmann, Alexander, 96260 Weismain (DE); Stammberger, Jens, 96472 Rödental (DE); Hetzel, Ralf, 96231 Bad Staffelstein (DE)
(74) Vertreter: Hafner & Kohl Patent- und Rechtsanwälte PartnerschaftmbB

(56) Entgegenhaltungen:
- WO-A2-2016/079494
- DE-A1-102014 010 942
- US-A1- 2014 287 080

## Beschreibung

Die Erfindung betrifft eine Vorrichtung zur additiven Herstellung dreidimensionaler Objekte durch sukzessives schichtweises selektives Belichten und damit einhergehendes Verfestigen sukzessives schichtweises selektives von Baumaterialschichten aus einem vermittels eines Energiestrahls verfestigbaren Baumaterial, umfassend eine Filtereinrichtung, welche zur Filterung eines im Rahmen der Durchführung additiver Bauvorgänge in einer Prozesskammer der Vorrichtung entstehenden, insbesondere prozessbedingt entstehende Verunreinigungen enthaltenden, Prozessgases eingerichtet ist.

Entsprechende Vorrichtungen zur additiven Herstellung dreidimensionaler Objekte sind, z. B. in Form von Vorrichtungen zur Durchführung selektiver Lasersinter- bzw. selektiver Laserschmelzverfahren, dem Grunde nach bekannt. Entsprechende Vorrichtungen umfassen typischerweise eine Filtereinrichtung, welche zur Filterung eines im Rahmen der Durchführung additiver Bauvorgänge in einer Prozesskammer der Vorrichtung entstehenden, insbesondere prozessbedingt entstehende Verunreinigungen, d. h. insbesondere so genannte Schmauchpartikel, enthaltenden, Prozessgases eingerichtet ist.

WO2016/079494 und US2014/0287080 offenbaren eine Vorrichtung zur generativen Herstellung dreidimensionaler Objekte durch sukzessives schichtweises selektives Belichten, umfassend eine Filtereinrichtung mit mehreren Filtermodulen, welche zur Filterung eines Prozessgases eingerichtet ist, dadurch gekennzeichnet, wobei jedes Filtermodul filtermodulseitige Anschlussschnittstellen umfasst, über welche es bedarfsweise an definierte vorrichtungsseitige Anschlussbereiche einer von dem Prozessgas durchströmten vorrichtungsseitigen Leitungsstruktur angeschlossen ist.

Die spezifischen Anforderungen an entsprechende Filtereinrichtungen, d. h. z. B. ein mit der Filtereinrichtung maximal filterbares Filtervolumen, können für verschiedene additive Bauvorgänge, z. B. in Abhängigkeit der geometrisch-konstruktiven Gestalt des oder der jeweils additiv herzustellenden Objekte, variieren. Beispielsweise kann durch Erfahrungswerte oder Simulationen ermittelt werden, welche Menge an Verunreinigungen in einem Prozessgas zu erwarten sind. Beispielsweise kann es, z. B. für einen effizienten Betrieb der Filtereinrichtung, zweckmäßig sein, für einen bestimmten additiven Bauvorgang eine Filtereinrichtung mit einem im Vergleich großen oder einem im Vergleich kleinen maximal filterbaren Filtervolumen zu verwenden.

Bis dato ist keine vollkommen zufriedenstellende Lösung für eine im Hinblick auf die bei verschiedenen additiven Bauvorgängen gegebenen spezifischen Anforderungen anpassbare Filtereinrichtung bekannt.

Der Erfindung liegt die Aufgabe zugrunde, eine demgegenüber verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Vorrichtung umfasst die zur Durchführung additiver Bauvorgänge typischerweise erforderlichen Funktionskomponenten. Hierzu zählen insbesondere eine Beschichtungseinrichtung, welche zur Ausbildung selektiv zu verfestigender Baumaterialschichten (in der Bauebene der Vorrichtung) eingerichtet ist, und eine Belichtungseinrichtung, welche zur selektiven Belichtung selektiv zu verfestigender Baumaterialschichten (in der Bauebene der Vorrichtung) eingerichtet ist. Die Beschichtungseinrichtung umfasst typischerweise mehrere Bestandteile, d. h. z. B. ein ein, insbesondere klingenförmiges, Beschichtungswerkzeug umfassendes Beschichtungselement sowie eine Führungseinrichtung zur Führung des Beschichtungselements entlang einer definierten Bewegungsbahn. Auch die Belichtungseinrichtung umfasst typischerweise mehrere Bestandteile, d. h. z. B. eine Strahlerzeugungseinrichtung zur Erzeugung eines Energie- bzw. Laserstrahls, eine Strahlablenkeinrichtung (Scannereinrichtung) zur Ablenkung eines von der Strahlerzeugungseinrichtung erzeugten Energie- bzw. Laserstrahls auf einen zu belichtenden Bereich einer selektiv zu verfestigenden Baumaterialschicht sowie diverse optische Elemente, wie z. B. Linsenelemente, Objektivelemente, etc.

Die Vorrichtung umfasst eine Filtereinrichtung, welche zur Filterung eines im Rahmen der Durchführung additiver Bauvorgänge in einer Prozesskammer der Vorrichtung entstehenden, insbesondere prozessbedingt entstehende Verunreinigungen enthaltenden, Prozessgases eingerichtet ist. Unter einer Filterung des Prozessgases ist ein Entfernen entsprechender Verunreinigungen aus dem Prozessgas zu verstehen. Bei entsprechenden Verunreinigungen in einem zu filternden Prozessgas handelt es sich insbesondere um prozessbedingte entstehende Rauch- oder Schmauchpartikel und/oder um nicht verfestigte Baumaterialpartikel ("Schweißspritzer").

Die Filtereinrichtung umfasst mehrere Filtermodule. Jedes Filtermodul umfasst ein Filtermodulgehäuse. Jedes Filtermodulgehäuse umfasst einen geometrisch definiert konfigurierten Filterkörperaufnahmeraum. Der Filterkörperaufnahmeraum ist zur Aufnahme (nur) einer definierten Anzahl geometrisch definiert konfigurierter Filterkörper eingerichtet. Mit anderen Worten ist ein jeweiliger Filterkörperaufnahmeraum im Hinblick auf die darin aufnehmbaren bzw. aufgenommenen Filterkörper derart geometrisch definiert konfiguriert, d. h. derart geometrisch-konstruktiv bemessen, dass in diesem nur die für das jeweilige Filtermodul definierte Anzahl geometrisch definiert konfigurierter Filterkörper aufgenommen werden kann. Unabhängig von seiner geometrischen Konfiguration ist ein Filterkörper aus einem, z. B. porösen oder zellularen, Filtermaterial gebildet bzw. umfasst wenigstens ein solches.

Beispielsweise kann ein Filtermodulgehäuse bzw. ein Filterkörperaufnahmeraum eine (hohl)zylindrische Grundform mit gegebenen Abmessungen, d. h. einem gegebenen Außen- und Innenradius sowie einer gegebenen Höhe, aufweisen; ein entsprechender Filterkörperaufnahmeraum ist als Zylinder bzw. Hohlzylinder mit gegebenen Abmessungen geometrisch definiert konfiguriert, in welchem aufgrund seiner geometrisch definierten Konfiguration nur eine definierte Anzahl geometrisch definiert konfigurierter Filterkörper, d. h. Filterkörper mit einer ring- bzw. ringsegmentförmigen Grundform, deren Außen- und Innenradius sowie deren Höhe bzw. Gesamthöhe auf die Abmessungen des Filterkörperaufnahmeraums abgestimmt sind, aufgenommen werden kann bzw. können. Die Ausführungen gelten selbstverständlich für Filtermodulgehäuse bzw. Filterkörperaufnahmeräume mit einer anderen als einer (hohl)zylindrischen Grundform analog.

Ein jeweiliger Filterkörperaufnahmeraum weist daher ein räumlich definiertes Filterkörperaufnahmeraumvolumen auf, in welchem (nur) die jeweils definierte Anzahl geometrisch definiert konfigurierter Filterkörper aufnehmbar bzw. aufgenommen ist. Unter einer definierten Anzahl geometrisch definiert konfigurierter Filterkörper ist auch eine Anzahl von eins zu verstehen, d. h. in einem Filterkörperaufnahmeraum kann auch nur ein (einziger) geometrisch definiert konfigurierter Filterkörper aufnehmbar bzw. aufgenommen sein.

Typischerweise unterscheiden sich die Filtermodulgehäuse der Filtermodule in der jeweils definierten Anzahl der in den jeweiligen geometrisch definiert konfigurierten filtermodulgehäuseseitig umfassten Filterkörperaufnahmeräumen aufnehmbaren bzw. aufgenommenen geometrisch definiert konfigurierten Filterkörper. Die Filterkörperaufnahmeräume der jeweiligen Filtermodulgehäuse unterscheiden sich also typischerweise in ihren jeweiligen Filterkörperaufnahmevolumina, wobei in jedem Filterkörperaufnahmeraum nur eine definierte Anzahl geometrisch definiert konfigurierter Filterkörper aufnehmbar ist.

Ausgehend von Filterkörpern einer bestimmten geometrisch definierten Konfiguration umfasst ein erstes Filtermodul einen Filterkörperaufnahmeraum, in welchem eine erste Anzahl solcher Filterkörper aufnehmbar bzw. aufgenommen ist, und ein zweites (bzw. weiteres) Filtermodul einen Filterkörperaufnahmeraum, in welchem eine von der der ersten Anzahl unterschiedliche zweite Anzahl solcher Filterkörper aufnehmbar bzw. aufgenommen ist. Beispielsweise kann ein erstes Filtermodul einen Filterkörperaufnahmeraum umfassen, in welchem nur ein einziger solcher Filterkörper aufnehmbar bzw. aufgenommen ist, ein zweites Filtermodul einen Filterkörperaufnahmeraum umfassen, in welchem im Hinblick auf den Filterkörperaufnahmeraum des ersten Filtermoduls wenigstens ein weiterer solcher Filterkörper aufnehmbar bzw. aufgenommen ist, ein drittes Filtermodul einen Filterkörperaufnahmeraum umfassen, in welchem im Hinblick auf den Filterkörperaufnahmeraum des zweiten Filtermoduls wenigstens ein weiterer solcher Filterkörper aufnehmbar bzw. aufgenommen ist, und so fort.

Sofern in einem Filterkörperaufnahmeraum mehrere Filterkörper aufgenommen sind, können diese z. B. stapelartig übereinander angeordnet sein. Die Filterkörper können dabei miteinander fluchtend angeordnet sein. Sind die Filterkörper ringartig bzw. - förmig, im Allgemeinen mit einem filterkörperseitig definierten Innenraum, ausgebildet, können die jeweiligen filterkörperseitig definierten Innenräume also miteinander fluchten. Alternativ zu einer stapelartigen Anordnung jeweiliger Filterkörper übereinander, ist auch eine reihenartige Anordnung jeweiliger Filterkörper nebeneinander denkbar.

Jedes Filtermodul umfasst (zwei) Anschlussschnittstellen, über welche es bedarfsweise an definierte vorrichtungsseitige Anschlussbereiche einer von dem (zu filternden bzw. gefilterten) Prozessgas durchströmbaren bzw. durchströmten vorrichtungsseitigen Leitungs- bzw. Rohrstruktur anschließbar oder angeschlossen ist. Die vorrichtungsseitigen Anschlussbereiche können z. B. Flanschbereiche umfassende Anschlussstutzen umfassen. Die der Filtereinrichtung zugehörigen Filtermodule können sonach bedarfsweise (aus)gewechselt werden, um für einen bestimmten additiven Bauvorgang einen effizienten Betrieb der Filtereinrichtung zu gewährleisten. Wie im Zusammenhang mit dem eingangs beschriebenen Stand der Technik erläutert, kann es, für einen effizienten Betrieb der Filtereinrichtung bisweilen zweckmäßig sein, eine Filtereinrichtung mit einem im Vergleich großen oder einem im Vergleich kleinen maximal filterbaren Filtervolumen zu verwenden. Insgesamt liegt damit eine Filtereinrichtung mit einer variabel anpassbaren Filtergröße vor. Die Filtergröße ist durch den Einsatz unterschiedlicher Filtermodule bzw. durch die unterschiedliche Anzahl der in den Filterkörperaufnahmeräumen der Filtermodulgehäuse der jeweiligen Filtermodule aufgenommenen Filterkörper bedingt.

Jeweilige filtermodulseitige Anschlussschnittstellen können geeignete Befestigungs- und Dichtungselemente umfassen. Die Anschlussschnittstellen können als Flanschbereiche umfassende Anschlussstutzen ausgebildet sein. Jeweilige Anschlussstutzen bzw. Flanschbereiche umfassen typischerweise Befestigungs- und Dichtungselemente. Jeweilige Befestigungselemente können zur Befestigung eines Filtermoduls in einer unveränderlichen lagefesten Positionierung an den vorrichtungsseitigen Anschlussbereichen eingerichtet sein. Ein Befestigungselement kann eine form- und/oder kraftschlüssige Befestigung des Filtermoduls an einem vorrichtungsseitigen Anschlussbereich ermöglichen. Ein eine form- bzw. kraftschlüssige Befestigung eines Filtermoduls an einem vorrichtungsseitigen Anschlussbereich ermöglichendes Befestigungselement kann z. B. eine Befestigungs- bzw. Spannschelle sein. Entsprechende Befestigungselemente können demnach z. B. teil- oder vollringartige bzw. -förmige Befestigungs- bzw. Spannschellen sein bzw. umfassen. Entsprechende Dichtungselemente können z. B. Dichtungsringe sein bzw. umfassen.

Die Anschlussschnittstellen aller Filtermodule sind zweckmäßig gleich (identisch) konfiguriert; dies vereinfacht den bedarfsweisen Wechsel jeweiliger Filtermodule. Die Möglichkeit eines einfachen Wechsels von Filtermodulen verbessert die Effizienz des Betriebs der Vorrichtung insgesamt.

Zweckmäßig bildet ein jeweiliges Filtermodul eine vorkonfigurierbare oder vorkonfigurierte, gesondert handhabbare Baugruppe. Das Handling jeweiliger Filtermodule ist sonach vereinfacht, Filtermodule können problemlos, insbesondere auch automatisierbar bzw. automatisiert, z. B. im Zusammenhang mit einem, wie beschriebenen, Wechsel gehandhabt werden.

An den vorrichtungsseitigen Anschlussbereichen sind typischerweise nur Filtermodulgehäuse einer bestimmten geometrisch definierten Konfiguration, insbesondere einer bestimmten Länge, anschließbar; mithin können an den vorrichtungsseitigen Anschlussbereichen typischerweise nur Filtermodulgehäuse einer bestimmten geometrisch definierten Konfiguration, insbesondere einer bestimmten Länge, angeschlossen werden. Die der Filtereinrichtung zugehörigen Filtermodule weisen daher zweckmäßig eine entsprechende geometrisch definierte Konfiguration, insbesondere eine entsprechende Länge, auf. Die geometrisch definierte Konfiguration der Filtermodule ermöglicht insbesondere einen passgenauen Anschluss der Filtermodule an den vorrichtungsseitigen Anschlussbereichen.

Um eine (positions)stabile Anordnung jeweiliger Filterkörper in jeweiligen filtermodulgehäuseseitig umfassten Filterkörperaufnahmeräumen zu gewährleisten, können der oder die in einem jeweiligen Filterkörperaufnahmeraum aufgenommenen Filterkörper mit einem Klemm- bzw. Presssitz in dem jeweiligen Filterkörperaufnahmeraum aufgenommen sein. Der Klemm- bzw. Presssitz kann durch ein gewisses Übermaß der in einem jeweiligen Filterkörperaufnahmeraum aufgenommenen Filterkörper gegenüber dem Filterkörperaufnahmeraum hergestellt sein.

Jedes Filtermodul kann eine filtermodulgehäuseseitig angeordnete oder ausgebildete Verschlusseinrichtung umfassen. Ein jeweiliges Filtermodulgehäuse kann eine über die jeweilige Verschlusseinrichtung verschließbare, eine Zugangsmöglichkeit in den jeweiligen Filterkörperaufnahmeraum bildende Zugangsöffnung aufweisen. Über das Zusammenwirken der Verschlusseinrichtung und der Zugangsöffnung ist ein gegebenenfalls, d. h. z. B. zu Servicezwecken, erforderlicher Wechsel eines oder mehrerer in einem jeweiligen Filterkörperaufnahmeraum aufgenommener Filterkörper möglich.

Die Verschlusseinrichtung kann ein, gegebenenfalls bewegbar an dem Filtermodulgehäuse angeordnetes oder ausgebildetes, deckelartiges Verschlusselement umfassen. Das Verschlusselement kann zwischen einer Offenstellung, in welcher das Verschlusselement derart relativ zu der Zugangsöffnung bewegt ist, dass ein Zugang in den Filterkörperaufnahmeraum möglich ist, und einer Schließstellung, in welcher das Verschlusselement derart relativ zu der Zugangsöffnung bewegt ist, dass ein Zugang in den Filterkörperaufnahmeraum nicht möglich ist, (schwenk)bewegbar gelagert sein. Das Verschlusselement ist in der Schließstellung typischerweise derart relativ zu der Zugangsöffnung bewegt, d. h. insbesondere gegen die Zugangsöffnung bewegt, dass der Filterkörperaufnahmeraum fluiddicht verschlossen ist.

In jedem Filtermodulgehäuse kann eine von dem Prozessgas bzw. einer Prozessgasströmung durchströmbare bzw. im Betrieb der Filtereinrichtung durchströmte Strömungskanalstruktur ausgebildet sein. Die Strömungskanalstruktur kann einen einen, insbesondere rohrförmigen, Einströmabschnitt zum Einströmen eines zu filternden Prozessgases bzw. einer zu filternden Prozessgasströmung in das Filtermodul umfassenden ersten Strömungskanalstrukturabschnitt und einen einen, insbesondere rohrförmigen, Ausströmabschnitt zum Ausströmen eines gefilterten Prozessgases bzw. einer gefilterten Prozessgasströmung aus dem Filtermodul umfassenden zweiten Strömungskanalstrukturabschnitt umfassen. Die beiden Strömungskanalstrukturabschnitte kommunizieren miteinander. Der oder die in dem jeweiligen filtermodulgehäuseseitig umfassten Filterkörperaufnahmeraum aufgenommenen Filterkörper sind zwischen dem ersten und dem zweiten Strömungskanalstrukturabschnitt angeordnet.

Neben der Vorrichtung betrifft die Erfindung auch eine Filtereinrichtung für eine Vorrichtung zur additiven Herstellung dreidimensionaler Objekte durch sukzessives schichtweises selektives Belichten gemäß Anspruch 9. Sämtliche Ausführungen im Zusammenhang mit der im Zusammenhang mit der Vorrichtung beschriebenen Filtereinrichtung gelten analog für die Filtereinrichtung.

Die Erfindung ist anhand von Ausführungsbeispielen in den Zeichnungsfiguren näher erläutert. Dabei zeigt:
- Fig. 1: eine Prinzipdarstellung einer Vorrichtung gemäß einem Ausführungsbeispiel; und
- Fig. 2, 3: je eine Prinzipdarstellung eines Filtermoduls gemäß einem Ausführungsbeispiel.

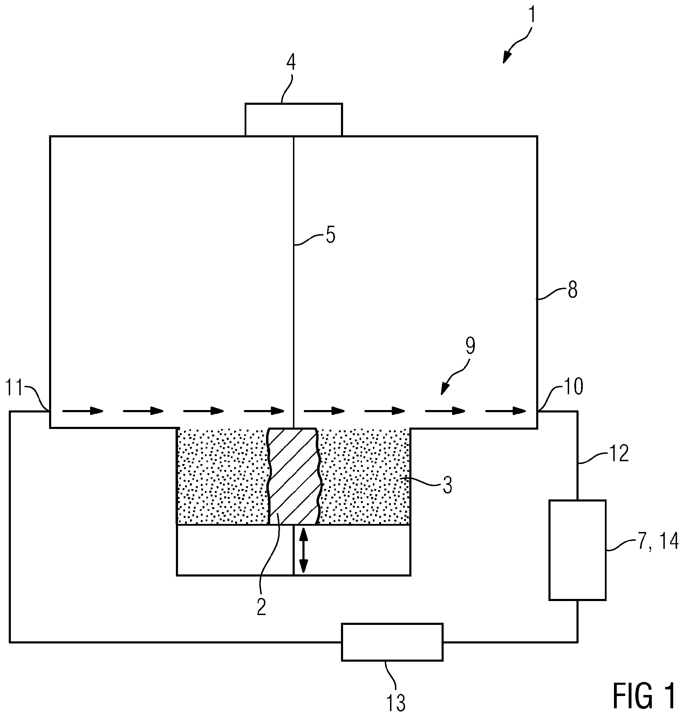

Fig. 1 zeigt eine Prinzipdarstellung einer Vorrichtung 1 gemäß einem Ausführungsbeispiel. In Fig. 1 ist nur der für die Erläuterung des nachfolgend beschriebenen Prinzips relevante Ausschnitt der Vorrichtung 1 in einer geschnittenen Ansicht gezeigt.

Die Vorrichtung 1 dient der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels eines Laserstrahls 5. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" CAD-Daten des herzustellenden Objekts 2 beinhalten. Die Vorrichtung 1 kann als LaserCUSING®-Vorrichtung, d. h. als Vorrichtung zur Durchführung selektiver Laserschmelzverfahren, ausgebildet sein.

Die Vorrichtung 1 umfasst die zur Durchführung additiver Bauvorgänge erforderlichen Funktionskomponenten. Hierzu zählt eine Beschichtungseinrichtung (nicht gezeigt), welche zur Ausbildung selektiv zu verfestigender Baumaterialschichten (in der Bauebene der Vorrichtung 1) eingerichtet ist, und eine Belichtungseinrichtung 4, welche zur selektiven Belichtung selektiv zu verfestigender Baumaterialschichten (in der Bauebene der Vorrichtung 1) eingerichtet ist. Die Beschichtungseinrichtung umfasst mehrere Bestandteile, nämlich ein ein, insbesondere klingenförmiges, Beschichtungswerkzeug umfassendes Beschichtungselement sowie eine Führungseinrichtung zur Führung des Beschichtungselements entlang einer definierten Bewegungsbahn. Auch die Belichtungseinrichtung 4 umfasst mehrere Bestandteile (nicht näher gezeigt) nämlich eine Strahlerzeugungseinrichtung zur Erzeugung des Laserstrahls 5, eine Strahlablenkeinrichtung zur Ablenkung des von der Strahlerzeugungseinrichtung erzeugten Laserstrahls 5 auf einen zu belichtenden Bereich einer selektiv zu verfestigenden Baumaterialschicht sowie diverse optische Elemente (nicht gezeigt), wie z. B. Objektivelemente, Linsenelemente, etc., welche typischerweise zwischen der Strahlerzeugungseinrichtung und der Strahlablenkeinrichtung angeordnet sind.

Die genannten Funktionskomponenten der Vorrichtung 1 sind an oder in einer Prozesskammer 8 der Vorrichtung 1 angeordnet oder ausgebildet. Die Prozesskammer 8 ist inertisiert, d. h. mit einem Inertgas, wie z. B. Argon, Stickstoff, etc., befüllt.

Die Vorrichtung 1 umfasst weiter eine Filtereinrichtung 7. Die Filtereinrichtung 7 ist zur Filterung eines im Rahmen der Durchführung additiver Bauvorgänge in der Prozesskammer 8 der Vorrichtung 1 entstehenden, insbesondere prozessbedingt entstehende Verunreinigungen enthaltenden, Prozessgases 9 eingerichtet. Bei entsprechenden Verunreinigungen in einem zu filternden Prozessgas handelt es sich insbesondere um prozessbedingte entstehende Rauch- oder Schmauchpartikel und/oder um nicht verfestigte Baumaterialpartikel ("Schweißspritzer"). Die Strömung des Prozessgases 9 durch die Prozesskammer 8, d. h. die Prozessgasströmung, ist durch die Pfeile angedeutet.

Ersichtlich ist die Filtereinrichtung 7 in eine sich zwischen einer prozesskammerseitigen Ausströmöffnung 10 und einer prozesskammerseitigen Einströmöffnung 11 erstreckenden, mehrere Leitungselemente (nicht näher bezeichnet) umfassenden Leitungs- bzw. Rohrstruktur 12 geschaltet. In die Leitungs- bzw. Rohrstruktur 12 ist weiterhin eine Pumpeneinrichtung 13, welche zur Erzeugung einer die Strömung des Prozessgases 9 durch die Leitungs- bzw. Rohrstruktur 12, d. h. auch durch die Filtereinrichtung 7, ermöglichenden Saugströmung eingerichtet ist, geschaltet. Ersichtlich ist durch die Prozesskammer 8 und die Leitungs- bzw. Rohrstruktur 12 ein geschlossener Strömungskreislauf gebildet; das Prozessgas 9 strömt zwischen der Prozesskammer 8 und der Leitungs- bzw. Rohrstruktur 12 sonach in einem geschlossenen Strömungskreislauf.

Die Filtereinrichtung 7 umfasst mehrere Filtermodule 14. Jedes Filtermodul 14 umfasst ein Filtermodulgehäuse 15, welches einen geometrisch definiert konfigurierten Filterkörperaufnahmeraum 16 umfasst. Der Filterkörperaufnahmeraum 16 eines Filtermoduls 14 ist zur Aufnahme (nur) einer definierten Anzahl geometrisch definiert konfigurierter Filterkörper 18 eingerichtet. Ein jeweiliger Filterkörperaufnahmeraum 16 ist im Hinblick auf die darin aufnehmbaren bzw. aufgenommenen Filterkörper 18 derart geometrisch definiert konfiguriert, d. h. derart geometrisch-konstruktiv bemessen, dass in diesem nur die für das jeweilige Filtermodul 14 definierte Anzahl geometrisch definiert konfigurierter Filterkörper 18 aufgenommen werden kann.

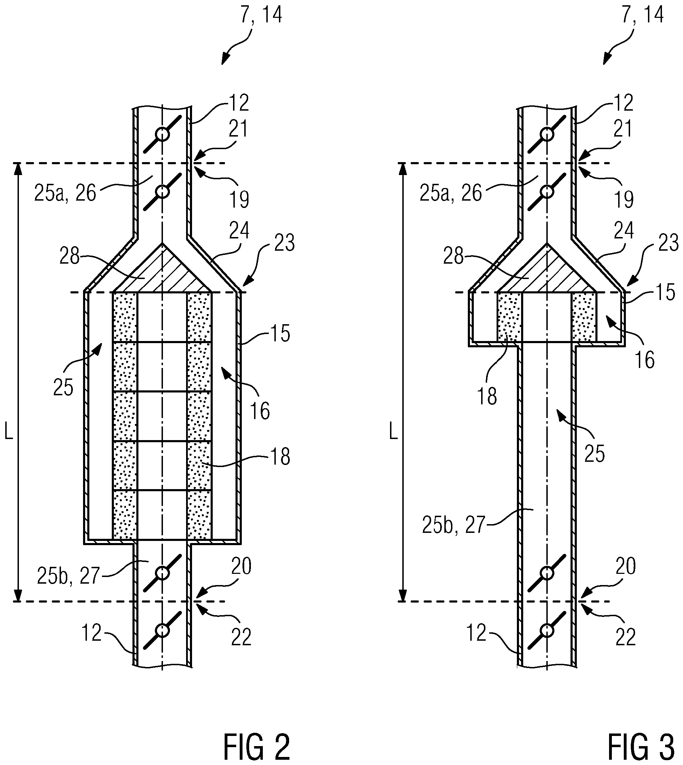

Die Fig. 2, 3 zeigen je eine Prinzipdarstellung eines der Filtereinrichtung 7 zugehörigen Filtermoduls 14 in einer (längs)geschnittenen Ansicht.

Die in den Fig. 2, 3 gezeigten Filtermodule 14 weisen je ein Filtermodulgehäuse 15 bzw. einen Filterkörperaufnahmeraum 16 mit einer (hohl)zylindrischen Grundform mit gegebenen Abmessungen, d. h. einem gegebenen Außen- bzw. Innenradius sowie einer gegebenen Höhe, auf. Die jeweiligen Filterkörperaufnahmeräume 16 sind durch ihre gegebenen Abmessungen geometrisch definiert konfiguriert. Aufgrund deren jeweiliger geometrisch definierter Konfiguration kann in den Filterkörperaufnahmeräumen 16 jeweils nur eine definierte Anzahl geometrisch definiert konfigurierter Filterkörper 18, d. h. in dem Ausführungsbeispiel Filterkörper 18 mit einer ringförmigen Grundform, deren Außen- und Innenradius sowie deren Höhe bzw. Gesamthöhe auf die Abmessungen des jeweiligen Filterkörperaufnahmeraums 16 abgestimmt sind, aufgenommen werden.

In dem Filterkörperaufnahmeraum 16 des in Fig. 2 gezeigten Filtermoduls 14 können fünf Filterkörper 18 aufgenommen werden, in dem Filterkörperaufnahmeraum 16 des in Fig. 3 gezeigten Filtermoduls 14 kann dagegen nur ein (einziger) Filterkörper 18 aufgenommen werden.

Die jeweiligen Filterkörperaufnahmeräume 16 weisen daher ein räumlich definiertes Filterkörperaufnahmeraumvolumen ("Volumen") auf, in welchem (nur) die jeweils definierte Anzahl geometrisch definiert konfigurierter Filterkörper 18 aufnehmbar bzw. aufgenommen ist. Unter einer definierten Anzahl geometrisch definiert konfigurierter Filterkörper ist, wie sich aus Fig. 3 ergibt, auch eine Anzahl von eins zu verstehen, d. h. in einem Filterkörperaufnahmeraum 16 kann auch nur ein (einziger) geometrisch definiert konfigurierter Filterkörper 18 aufnehmbar bzw. aufgenommen sein. Gegebenenfalls wäre es auch denkbar, in dem in Fig. 2 gezeigten Ausführungsbeispiel einen einzigen länglichen Filterkörper 18 anzuordnen, dessen Höhe der Gesamthöhe der fünf einzelnen Filterkörper 18 entspricht. Der längliche Filterkörper 18 weist aufgrund seiner im Vergleich größeren Höhe eine andere geometrisch definierte Konfiguration als die einzelnen Filterkörper 18 auf.

Die Filtermodulgehäuse 15 der Filtermodule 14 unterscheiden sich sonach in der jeweils definierten Anzahl der in den jeweiligen geometrisch definiert konfigurierten filtermodulgehäuseseitig umfassten Filterkörperaufnahmeräumen 16 aufnehmbaren bzw. aufgenommenen geometrisch definiert konfigurierten Filterkörper 18. Die Filterkörperaufnahmeräume 16 der jeweiligen Filtermodulgehäuse 15 unterscheiden sich also in ihren jeweiligen Filterkörperaufnahmevolumina, wobei, wie erwähnt, in jedem Filterkörperaufnahmeraum 16 nur eine definierte Anzahl geometrisch definiert konfigurierter Filterkörper 18 aufnehmbar ist.

Anhand der Fig. 2, 3 ist ersichtlich, dass ausgehend von Filterkörpern 18 einer bestimmten geometrisch definierten Konfiguration, d. h. vorliegend ringförmigen Filterkörpern 18 mit einem gegebenen Außen- und Innenradius sowie einer gegebenen Höhe, ein erstes Filtermodul 14 einen Filterkörperaufnahmeraum 16 umfasst, in welchem eine erste Anzahl solcher Filterkörper 18 aufnehmbar bzw. aufgenommen ist, und ein zweites (bzw. weiteres) Filtermodul 14 einen Filterkörperaufnahmeraum 16 umfasst, in welchem eine von der der ersten Anzahl unterschiedliche zweite Anzahl solcher Filterkörper 18 aufnehmbar bzw. aufgenommen ist. Wie erwähnt, können in dem Filterkörperaufnahmeraum 16 des in Fig. 2 gezeigten Filtermoduls 14 fünf Filterkörper 18 und in dem Filterkörperaufnahmeraum 16 des in Fig. 3 gezeigten Filtermoduls 14 nur ein (einziger) Filterkörper 18 aufgenommen werden.

Anhand von Fig. 2 ist ferner ersichtlich, dass, sofern in einem Filterkörperaufnahmeraum 16 mehrere Filterkörper 18 aufgenommen sind, diese stapelartig übereinander angeordnet sein können. Die hier ringförmigen Filterkörper 18 sind dabei miteinander fluchtend angeordnet; die jeweiligen filterkörperseitig definierten Innenräume fluchten miteinander. Um eine (positions)stabile Anordnung der Filterkörper 18 in jeweiligen Filterkörperaufnahmeräumen 16 zu gewährleisten, sind die Filterkörper 18 mit einem Klemm- bzw. Presssitz in den jeweiligen Filterkörperaufnahmeräumen 16 aufgenommen.

Anhand der Fig. 2, 3 ist weiter ersichtlich, dass jedes Filtermodul 14 zwei Anschlussschnittstellen 19, 20 umfasst, über welche es bedarfsweise an einen definierten vorrichtungsseitigen Anschlussbereich 21, 22 der von dem zu filternden bzw. gefilterten Prozessgas 9 durchströmbaren bzw. durchströmten Leitungs- bzw. Rohrstruktur 12 anschließbar bzw. angeschlossen ist. Die vorrichtungsseitigen Anschlussbereiche 21, 22 umfassen Flanschbereiche umfassende Anschlussstutzen (nicht näher bezeichnet). Die Filtermodule 14 können sonach bedarfsweise (aus)gewechselt werden, um für einen bestimmten additiven Bauvorgang einen effizienten Betrieb der Filtereinrichtung 7 zu gewährleisten. Es liegt damit eine Filtereinrichtung 7 mit einer variabel anpassbaren Filtergröße vor. Die Filtergröße ist durch den Einsatz unterschiedlicher Filtermodule 14 bzw. durch die unterschiedliche Anzahl der in den Filterkörperaufnahmeräumen 16 der Filtermodulgehäuse 15 der jeweiligen Filtermodule 14 aufgenommenen Filterkörper 18 bedingt.

Jeweilige filtermodulseitige Anschlussschnittstellen 19, 20 umfassen geeignete Befestigungs- und Dichtungselemente (nicht gezeigt). Auch jeweilige filtermodulseitige Anschlussschnittstellen 19, 20 können als Flanschbereiche umfassende Anschlussstutzen mit entsprechenden Befestigungs- und Dichtungselementen ausgebildet sein. Jeweilige Befestigungselemente können zur Befestigung eines Filtermoduls 14 in einer unveränderlichen lagefesten Positionierung an den vorrichtungsseitigen Anschlussbereichen 21, 22 eingerichtet sein. Ein Befestigungselement kann z. B. eine form- und/oder kraftschlüssige Befestigung des Filtermoduls 7 an den vorrichtungsseitigen Anschlussbereichen 21, 22 ermöglichen. Ein eine form- bzw. kraftschlüssige Befestigung eines Filtermoduls 7 an einem vorrichtungsseitigen Anschlussbereich 21, 22 ermöglichendes Befestigungselement kann z. B. eine Befestigungs- bzw. Spannschelle sein. Entsprechende Befestigungselemente können demnach z. B. teil- oder vollringartige bzw. -förmige Befestigungs- bzw. Spannschellen sein. Entsprechende Dichtungselemente können z. B. Dichtungsringe sein.

Die Anschlussschnittstellen 19, 20 aller Filtermodule 14 sind gleich (identisch) konfiguriert; dies vereinfacht den bedarfsweisen Wechsel jeweiliger Filtermodule 14.

Die jeweiligen Filtermodule 14 bilden sonach vorkonfigurierbare bzw. vorkonfigurierte, gesondert handhabbare Baugruppen. Das Handling jeweiliger Filtermodule 14 ist sonach vereinfacht, Filtermodule 14 können problemlos, insbesondere auch automatisierbar bzw. automatisiert gehandhabt bzw. gewechselt werden.

Ersichtlich sind an den vorrichtungsseitigen Anschlussbereichen 21, 22 nur Filtermodule 14 bzw. Filtermodulgehäuse 15 einer bestimmten geometrisch definierten Konfiguration, insbesondere einer bestimmten Länge, anschließbar; mithin können an den vorrichtungsseitigen Anschlussbereichen 21, 22 nur Filtermodule 14 bzw. Filtermodulgehäuse 15 einer bestimmten geometrisch definierten Konfiguration, insbesondere einer bestimmten Länge, angeschlossen werden. Die Filtermodule 14 weisen daher eine entsprechende geometrisch definierte Konfiguration, insbesondere eine entsprechende Länge, auf, welche einen passgenauen Anschluss der Filtermodule 14 an die vorrichtungsseitigen Anschlussbereiche 21, 22 ermöglicht. Die Gesamtlänge L der in den Fig. 2, 3 gezeigten Filtermodule 14 bzw. Filtermodulgehäuse 15 ist identisch.

In jedem Filtermodulgehäuse 15 ist eine von dem Prozessgas 9 bzw. der Prozessgasströmung durchströmbare bzw. im Betrieb der Filtereinrichtung 7 durchströmte Strömungskanalstruktur 25 ausgebildet. Die Strömungskanalstruktur 25 umfasst einen einen rohrförmigen Einströmabschnitt 26 zum Einströmen des zu filternden Prozessgases 9 bzw. einer zu filternden Prozessgasströmung in das Filtermodul 14 umfassenden ersten Strömungskanalstrukturabschnitt 25a und einen einen rohrförmigen Ausströmabschnitt 27 zum Ausströmen des gefilterten Prozessgases 9 bzw. der gefilterten Prozessgasströmung aus dem Filtermodul 14 umfassenden zweiten Strömungskanalstrukturabschnitt 25b. Die beiden Strömungskanalstrukturabschnitte 25a, 25b kommunizieren miteinander. Der oder die in dem jeweiligen Filterkörperaufnahmeraum 16 aufgenommenen Filterkörper 18 sind zwischen dem ersten und dem zweiten Strömungskanalstrukturabschnitt 25a, 25b angeordnet. In dem ersten Strömungskanalstrukturabschnitt 25a ist ferner ein beispielhaft konusförmiges Strömungsführungselement 28 angeordnet, welches das zu filternde Prozessgas 9 gezielt zu den Filterkörpern 18 führt.

Jedes Filtermodul 14 umfasst optional eine filtermodulgehäuseseitig angeordnete oder ausgebildete Verschlusseinrichtung 23. Die jeweiligen Filtermodulgehäuse 15 weisen eine über die jeweilige Verschlusseinrichtung 23 verschließbare, eine Zugangsmöglichkeit in den jeweiligen Filterkörperaufnahmeraum 16 bildende Zugangsöffnung (nicht näher bezeichnet) auf. Über das Zusammenwirken der Verschlusseinrichtung 23 und der Zugangsöffnung ist ein gegebenenfalls, d. h. z. B. zu Servicezwecken, erforderlicher Wechsel eines oder mehrerer Filterkörper 18 möglich.

Die Verschlusseinrichtung 23 umfasst ein, gegebenenfalls bewegbar an dem Filtermodulgehäuse 15 angeordnetes bzw. ausgebildetes, deckelartiges Verschlusselement 24. In den in den Fig. 2, 3 gezeigten Ausführungsbeispielen ist das Verschlusselement 24 durch einen den rohrförmigen Einströmabschnitt 26 umfassenden Teil des ersten Strömungskanalstrukturabschnitts 25a gebildet.

Das Verschlusselement 24 ist zwischen einer Offenstellung, in welcher das Verschlusselement 24 derart relativ zu der Zugangsöffnung bewegt ist, dass ein Zugang in den Filterkörperaufnahmeraum 16 möglich ist, und einer in den Fig. 2, 3 gezeigten Schließstellung, in welcher das Verschlusselement 24 derart relativ zu der Zugangsöffnung bewegt ist, dass ein Zugang in den Filterkörperaufnahmeraum 16 nicht möglich ist, (schwenk)bewegbar gelagert. Das Verschlusselement 24 ist in der Schließstellung typischerweise derart relativ zu der Zugangsöffnung bewegt, d. h. insbesondere gegen die Zugangsöffnung bewegt, dass der Filterkörperaufnahmeraum 16 fluiddicht verschlossen ist.

## Patentansprüche

1. Vorrichtung (1) zur additiven Herstellung dreidimensionaler Objekte (2) durch sukzessives schichtweises selektives Belichten und damit einhergehendes sukzessives schichtweises selektives Verfestigen von Baumaterialschichten aus einem vermittels eines Energiestrahls verfestigbaren Baumaterial (3), umfassend eine Filtereinrichtung (7), welche zur Filterung eines im Rahmen der Durchführung additiver Bauvorgänge in einer Prozesskammer (8) der Vorrichtung (1) entstehenden, insbesondere prozessbedingt entstehende Verunreinigungen enthaltenden, Prozessgases (9) eingerichtet ist, **dadurch gekennzeichnet, dass** die Filtereinrichtung (7) mehrere Filtermodule (14) mit jeweils einem Filtermodulgehäuse (15) umfasst, wobei jedes Filtermodulgehäuse (15) einen geometrisch definiert konfigurierten Filterkörperaufnahmeraum (16) umfasst, welcher zur Aufnahme einer definierten Anzahl geometrisch definiert konfigurierter Filterkörper (18) eingerichtet ist, wobei jedes Filtermodul (14) filtermodulseitige Anschlussschnittstellen (19, 20) umfasst, über welche es bedarfsweise an definierte vorrichtungsseitige Anschlussbereiche (21, 22) einer von dem Prozessgas (9) durchströmbaren oder durchströmten vorrichtungsseitigen Leitungsstruktur (12) anschließbar oder angeschlossen ist, wobei sich die Filterkörperaufnahmeräume (16) der jeweiligen Filtermodulgehäuse (15) in ihren jeweiligen Filterkörperaufnahmevolumina unterscheiden, sodass in jedem Filterkörperaufnahmeraum (16) nur eine definierte Anzahl geometrisch definiert konfigurierter Filterkörper (18) aufnehmbar ist.

2. Vorrichtung nach Anspruch 1, **dadurch gekennzeichnet, dass** ein jeweiliges Filtermodul (14) eine vorkonfigurierbare oder vorkonfigurierte, gesondert handhabbare Baugruppe bildet.

3. Vorrichtung nach einem der vorhergehenden Ansprüche, **dadurch gekennzeichnet, dass** die Anschlussschnittstellen (19, 20) aller Filtermodule (14) gleich konfiguriert sind.

4. Vorrichtung nach einem der vorhergehenden Ansprüche, **dadurch gekennzeichnet, dass** an den vorrichtungsseitigen Anschlussbereichen (21, 22) nur Filtermodulgehäuse (15) einer bestimmten geometrisch definierten Konfiguration, insbesondere einer bestimmten Länge, anschließbar sind, wobei alle Filtermodule (14) der Filtereinrichtung (7) eine entsprechende geometrisch definierte Konfiguration, insbesondere eine entsprechende Länge, aufweisen.

5. Vorrichtung nach einem der vorhergehenden Ansprüche, **dadurch gekennzeichnet, dass** der oder die in einem jeweiligen filtermodulgehäuseseitig umfassten Filterkörperaufnahmeraum (16) aufgenommenen Filterkörper (18) mit einem Presssitz in dem jeweiligen Filterkörperaufnahmeraum (16) aufgenommen sind.

6. Vorrichtung nach einem der vorhergehenden Ansprüche, **dadurch gekennzeichnet, dass** jedes Filtermodul (14) eine filtermodulgehäuseseitig angeordnete oder ausgebildete Verschlusseinrichtung (23) umfasst, wobei ein jeweiliges Filtermodulgehäuse (15) eine über die jeweilige Verschlusseinrichtung (23) verschließbare, eine Zugangsmöglichkeit in den jeweiligen Filterkörperaufnahmeraum (16) bildende Zugangsöffnung aufweist.

7. Vorrichtung nach Anspruch 6, **dadurch gekennzeichnet, dass** die Verschlusseinrichtung (23) ein, gegebenenfalls bewegbar an dem Filtermodulgehäuse (15) angeordnetes oder ausgebildetes, deckelartiges Verschlusselement (24) umfasst.

8. Vorrichtung nach einem der vorhergehenden Ansprüche, **dadurch gekennzeichnet, dass** in jedem Filtermodulgehäuse (15) eine von dem Prozessgas (9) durchströmbare oder durchströmte Strömungskanalstruktur (25) ausgebildet ist, wobei die Strömungskanalstruktur (25) einen einen Einströmabschnitt (26) zum Einströmen des zu filternden Prozessgases (9) in das Filtermodul (14) umfassenden ersten Strömungskanalstrukturabschnitt (25a) und einen einen Ausströmabschnitt (27) zum Ausströmen eines gefilterten Prozessgases (9) aus dem Filtermodul (14) umfassenden zweiten Strömungskanalstrukturabschnitt (25b) umfasst, wobei der oder die in dem jeweiligen filtermodulgehäuseseitig umfassten Filterkörperaufnahmeraum (16) aufgenommenen Filterkörper (18) zwischen dem ersten und dem zweiten Strömungskanalstrukturabschnitt (25a, 25b) angeordnet sind.

9. Filtereinrichtung (7) für eine Vorrichtung (1) zur additiven Herstellung dreidimensionaler Objekte (2) durch sukzessives schichtweises selektives Belichten und damit einhergehendes sukzessives schichtweises selektives Verfestigen von Baumaterialschichten aus einem vermittels eines Energiestrahls verfestigbaren Baumaterial (3), **dadurch gekennzeichnet, dass** die Filtereinrichtung (7) mehrere Filtermodule (14) mit jeweils einem Filtermodulgehäuse (15) umfasst, wobei jedes Filtermodulgehäuse (15) einen geometrisch definiert konfigurierten Filterkörperaufnahmeraum (16) umfasst, welcher zur Aufnahme einer definierten Anzahl geometrisch definiert konfigurierter Filterkörper (18) eingerichtet ist, wobei jedes Filtermodul (14) filtermodulseitige Anschlussschnittstellen (19, 20) umfasst, über welche es bedarfsweise an definierte vorrichtungsseitige Anschlussbereiche (21, 22) einer von dem Prozessgas (9) durchströmbaren oder durchströmten vorrichtungsseitigen Leitungsstruktur (12) anschließbar oder angeschlossen ist, wobei sich die Filterkörperaufnahmeräume (16) der jeweiligen Filtermodulgehäuse (15) in ihren jeweiligen Filterkörperaufnahmevolumina unterscheiden, sodass in jedem Filterkörperaufnahmeraum (16) nur eine definierte Anzahl geometrisch definiert konfigurierter Filterkörper (18) aufnehmbar ist.

## Claims

1. Apparatus (1) for the additive manufacture of three-dimensional objects (2) by successive, layer-by-layer selective exposure and thus successive, layer-by-layer selective solidification of construction material layers of a construction material (3) that can be solidified by means of an energy beam, comprising a filter device (7), which is adapted to filter a process gas (9) arising in the course of executing additive construction processes in a process chamber (8) of the apparatus (1), in particular containing impurities arising due to the process, **characterised in that** the filter device (7) comprises several filter modules (14) each with a filter module housing (15), wherein each filter module housing (15) comprises a filter body receiving space (16) of a geometrically defined configuration, which space is adapted to receive a defined number of filter bodies (18) of a geometrically defined configuration, wherein each filter module (14) comprises connection interfaces (19, 20) on the filter module via which it can be or is connected if required to defined connection areas (21, 22) on the apparatus of a pipe structure (12) through which the process gas (9) can flow or flows, wherein the filter body receiving spaces (16) of the respective filter module housings (15) differ in their respective filter body receiving volumes, so that in each filter body receiving space (16) only a defined number of filter bodies (18) of a geometrically defined configuration can be received.

2. Apparatus according to claim 1, **characterised in that** a respective filter module (14) forms a preconfigurable or preconfigured, separately manageable assembly.

3. Apparatus according to one of the preceding claims, **characterised in that** the connection interfaces (19, 20) of all filter modules (14) are configured identically.

4. Apparatus according to any one of the preceding claims, **characterised in that** only filter module housings (15) of a certain geometrically defined configuration, in particular of a certain length, can be connected to the connection areas (21, 22) on the apparatus, wherein all filter modules (14) of the filter device (7) have a corresponding geometrically defined configuration, in particular a corresponding length.

5. Apparatus according to any one of the preceding claims, **characterised in that** the filter body or filter bodies (18) received in a filter body receiving space (16) comprised on the filter module housing are received in the respective filter body receiving space (16) with a press fit.

6. Apparatus according to any one of the preceding claims, **characterised in that** each filter module (14) comprises a closing device (23) arranged or formed on the filter module housing, wherein each filter module housing (15) has an access opening that can be closed via the respective closing device (23) and forms an access point into the respective filter body receiving space (16).

7. Apparatus according to claim 6, **characterised in that** the closing device (23) comprises a closing element (24) in the form of a cover that is arranged or formed, if applicable movably, on the filter module housing (15).

8. Apparatus according to any one of the preceding claims, **characterised in that** in each filter module housing (15) there is formed a flow channel structure (25) through which the process gas (9) can flow or flows, wherein the flow channel structure (25) comprises a first flow channel structural section (25a) comprising an inflow section (26) for the inflow of the process gas (9) to be filtered into the filter module (14) and a second flow channel structural section (25b) comprising an outflow section (27) for the outflow of a filtered process gas (9) from the filter module (14), wherein the filter body or filter bodies (18) received in the respective filter body receiving space (16) comprised on the filter module housing are arranged between the first and the second flow channel structural section (25a, 25b).

9. Filter device (7) for an apparatus (1) for the additive manufacture of three-dimensional objects (2) by successive, layer-by-layer selective exposure and thus successive, layer-by-layer selective solidification of construction material layers of a construction material (3) that can be solidified by means of an energy beam, **characterised in that** the filter device (7) comprises several filter modules (14) each with a filter module housing (15), wherein each filter module housing (15) comprises a filter body receiving space (16) of a geometrically defined configuration, which space is adapted to receive a defined number of filter bodies (18) of a geometrically defined configuration, wherein each filter module (14) comprises connection interfaces (19, 20) on the filter module via which it can be or is connected if required to defined connection areas (21, 22) on the apparatus of a pipe structure (12) through which the process gas (9) can flow or flows, wherein the filter body receiving spaces (16) of the respective filter module housings (15) differ in their respective filter body receiving volumes, so that in each filter body receiving space (16) only a defined number of filter bodies (18) of a geometrically defined configuration can be received.

## Revendications

1. Dispositif (1) destiné à la fabrication additive d'objets tridimensionnels (2) par irradiation sélective par couches successives et par conséquent par durcissement sélectif par couches successives de couches de matériau de construction en un matériau de construction (3) durcissable au moyen d'un faisceau d'énergie, comprenant un système de filtre (7), qui est conçu pour filtrer un gaz de processus (9) se formant dans une chambre de processus (8) du dispositif (1) dans le cadre de l'exécution de processus de construction additifs, en particulier contenant des impuretés se formant lors du processus, **caractérisé en ce que** le système de filtre (7) comprend plusieurs modules filtrants (14) dotés respectivement d'un boîtier de module filtrant (15), chaque boîtier de module filtrant (15) comprenant un espace de réception de corps filtrant (16) configuré de manière géométriquement définie, qui est conçu pour recevoir un nombre défini de corps filtrants (18) configurés de manière géométriquement définie, chaque module filtrant (14) comprenant des interfaces de raccordement (19, 20) côté module filtrant, par le biais desquelles il est ou peut être raccordé selon les besoins à des zones de raccordement (21, 22) définies côté dispositif d'une structure de conduit (12) côté dispositif qui est ou peut être parcourue par le gaz de processus (9), les espaces de réception de corps filtrant (16) des boîtiers de module filtrant (15) respectifs se distinguant par leurs volumes respectifs de réception de corps filtrant, de telle sorte que seulement un nombre défini de corps filtrants (18) configurés de manière géométriquement définie peut être reçu dans chaque espace de réception de corps filtrant (16).

2. Dispositif selon la revendication 1, **caractérisé en ce qu'**un module filtrant (14) respectif forme un ensemble préconfigurable ou préconfiguré, manipulable séparément.

3. Dispositif selon l'une des revendications précédentes, **caractérisé en ce que** les interfaces de raccordement (19, 20) de tous les modules filtrants (14) sont configurées de manière identique.

4. Dispositif selon l'une des revendications précédentes, **caractérisé en ce que** seulement des boîtiers de module filtrant (15) d'une configuration géométriquement définie précise, en particulier d'une longueur précise, peuvent être raccordés aux zones de raccordement (21, 22) côté dispositif, tous les modules filtrants (14) du système de filtre (7) présentant une configuration géométriquement définie correspondante, en particulier une longueur correspondante.

5. Dispositif selon l'une des revendications précédentes, **caractérisé en ce que** le ou les corps filtrants (18) reçus dans un espace de réception de corps filtrant (16) respectif situé côté boîtier de module filtrant sont reçus dans l'espace de réception de corps filtrant (16) respectif avec un ajustement serré.

6. Dispositif selon l'une des revendications précédentes, **caractérisé en ce que** chaque module filtrant (14) comprend un système de fermeture (23) disposé ou formé côté boîtier de module filtrant, un boîtier de module filtrant (15) respectif comportant une ouverture d'accès qui forme une possibilité d'accès dans l'espace de réception de corps filtrant (16) respectif et peut être fermée par le système de fermeture (23) respectif.

7. Dispositif selon la revendication 6, **caractérisé en ce que** le système de fermeture (23) comprend un élément de fermeture (24) en forme de couvercle, formé ou disposé le cas échéant de manière mobile sur le boîtier de module filtrant (15).

8. Dispositif selon l'une des revendications précédentes, **caractérisé en ce qu'**une structure de conduit d'écoulement (25), qui est ou peut être parcourue par le gaz de processus (9), est formée dans chaque boîtier de module filtrant (15), la structure de conduit d'écoulement (25) comprenant une première partie de structure de conduit d'écoulement (25a) comprenant une partie d'admission (26) pour l'admission du gaz de processus (9) à filtrer dans le module filtrant (14) et une seconde partie de structure de conduit d'écoulement (25b) comprenant une partie d'échappement (27) pour l'échappement d'un gaz de processus (9) filtré hors du module filtrant (14), le ou les corps filtrants (18) reçus dans l'espace de réception de corps filtrant (16) respectif situé côté boîtier de module filtrant étant disposés entre la première et la seconde partie de structure de conduit d'écoulement (25a, 25b).

9. Système de filtre (7) pour un dispositif (1) destiné à la fabrication additive d'objets tridimensionnels (2) par irradiation sélective par couches successives et par conséquent par durcissement sélectif par couches successives de couches de matériau de construction en un matériau de construction (3) durcissable au moyen d'un faisceau d'énergie, **caractérisé en ce que** le système de filtre (7) comprend plusieurs modules filtrants (14) dotés respectivement d'un boîtier de module filtrant (15), chaque boîtier de module filtrant (15) comprenant un espace de réception de corps filtrant (16) configuré de manière géométriquement définie, qui est conçu pour recevoir un nombre défini de corps filtrants (18) configurés de manière géométriquement définie, chaque module filtrant (14) comprenant des interfaces de raccordement (19, 20) côté module filtrant, par le biais desquelles il est ou peut être raccordé selon les besoins à des zones de raccordement (21, 22) définies côté dispositif d'une structure de conduit (12) côté dispositif qui est ou peut être parcourue par le gaz de processus (9), les espaces de réception de corps filtrant (16) des boîtiers de module filtrant (15) respectifs se distinguant par leurs volumes respectifs de réception de corps filtrant, de telle sorte que seulement un nombre défini de corps filtrants (18) configurés de manière géométriquement définie peut être reçu dans chaque espace de réception de corps filtrant (16).
